Europäisches Patentamt

European Patent Office

Office européen des brevets

(19)

(11) Veröffentlichungsnummer: **0 261 410**
**A1**

(12) # EUROPÄISCHE PATENTANMELDUNG

(21) Anmeldenummer: **87112198.4**

(22) Anmeldetag: **22.08.87**

(51) Int. Cl.⁴: **G11B 33/04 , G11B 15/68 ,**
**B65G 1/04 , A47B 49/00**

(30) Priorität: **22.08.86 DE 3628477**

(43) Veröffentlichungstag der Anmeldung:
**30.03.88 Patentblatt 88/13**

(84) Benannte Vertragsstaaten:
**AT BE CH DE FR GB IT LI NL SE**

(71) Anmelder: **Trapp, Hans-Jürgen, Dr.-Ing.**
**Salinenweg 31**
**D-7889 Grenzach-Wyhlen(DE)**

(72) Erfinder: **Trapp, Hans-Jürgen, Dr.**
**Salinenweg 31**
**D-7889 Grenzach-Wyhlen(DE)**
Erfinder: **Weber, René**
**Dorfbachweg 22**
**D-5035 Unterentfelden(DE)**

(74) Vertreter: **Patentanwälte Ruff und Beier**
**Neckarstrasse 50**
**D-7000 Stuttgart 1(DE)**

(54) **Vorrichtung zum Lagern von Datenträger-Einheiten, wie Magnetband-Kassetten, in einer Regaleinrichtung.**

(57) Eine Vorrichtung zum automatischen Lagern von Datenträger-Einheiten weist zwei konzentrisch zueinander angeordnete Rundregale (18, 19) auf, die beide um ihre gemeinsame Achse unabhängig voneinander drehbar antreibbar sind und mit denen eine Greifeinrichtung (II) vollautomatisch zusammenwirkt. Beide Regale können von einer kreiszylinderförmigen Schutzwand (26) umgeben sein, die eine schlitzartige Öffnung (27) aufweist. Die äußere Regaleinrichtung (19) weist eine Durchgriffsöffnung (29) auf. Der Zugriff zu den in den Regaleinrichtungen (18, 19) gelagerten Einheiten erfolgt durch die Zugangsöffnung (27) der Schutzwand (26) und ggf. die Durchgriffsöffnung (29) der äußeren Regaleinrichtung (19).

FIG. 1

# Vorrichtung zum Lagern von Datenträger-Einheiten, wie Magnetband-Kassetten, in einer Regaleinrichtung

Die Erfindung betrifft eine Vorrichtung zum automatischen Lagern und Handhaben von Datenträger-Einheiten.

Zur platzsparenden Lagerung von Gegenständen, die mit Hilfe automatischer Einrichtungen entnommen werden sollen, sind Hochregallager bekannt. Hierbei stehen Regale Rücken an Rücken, wobei zwischen den Vorderseiten der Regale Gänge frei sind, in denen ein automatisches Entnahmegerät in zwei Richtungen bewegbar ist. Derartige Lagereinrichtungen sind auch zur automatischen Lagerung von Magnetband-Kassetten verwendet worden. Es hat sich jedoch herausgestellt, daß gerade bei Verwendung von Magnetkassetten der Nachteil derartiger Regaleinrichtungen in der großen Zugriffszeit besteht. Die Zugriffszeit wird im wesentlichen durch die Dauer bestimmt, die die automatische Transporteinrichtung benötigt, um einen gelagerten Gegenstand zu holen.

Durch die DE-Patentschriften 25 19 864, 25 27 150 und 26 54 194 sind Großanlagen Regaleinheiten bekanntgeworden, die nach Art von Rundregalen ineinanderstehende Regaleinrichtungen aufweisen, welche über begehbare Zugangsöffnungen, über integrierte, innenliegende Lifteinrichtungen oder Schubfach-Auszuggeräte bzw. über Hubgabel-Laufkatzen zu bedienen sind. Derartige Regaleinheiten, die auch für die gefachartige Aufnahme von Kleinteilen ausgebildet sein können, bedürfen keiner besonderen Genauigkeit hinsichtlich ihrer jeweiligen Positionierung, weshalb bei ihnen auch nicht daran gedacht bzw. berücksichtigt worden ist, sie für höchste Genauigkeitsanforderungen bzw. für die Handhabung einer Datenträger-Ablage auszugestalten. Im Falle der Regaleinheit nach DE-OS 29 38 227 zum Beispiel ist deren Verwendung als Parkraum-Anlage für Kraftfahrzeuge vorgesehen.

Der Erfindung liegt die Aufgabe zugrunde, eine Vorrichtung zum Lagern von Datenträger-Einheiten, insbesondere zur automatischen Lagerung und Handhabung von Datenträger-Einheiten, zu schaffen, die bei platzsparender Lagerung der Einheiten einen schnelleren Zugriff ermöglicht. Des weiteren soll eine sichere und zuverlässig genaue Entnahme sowie Wiederablage der Datenträger-Einheiten unter größtmöglicher Schonung erreicht werden können, so daß stets die volle gespeicherte Kapazität zur Verfügung steht.

Zur Lösung dieser Aufgabe ist erfindungsgemäß vorgesehen, daß mindestens zwei Regalrichtungen derart benachbart angeordnet sind, daß die Vorderseite der jeweils hinteren Regaleinrichtung an die Rückseite der jeweils vorderen Regaleinrichtung angrenzt. Beide Regaleinrichtungen sollen längs einer sie trennenden Fläche bewegbar ausgebildet sein und die jeweils vordere Regaleinrichtung soll eine Durchgriffsöffnung aufweisen, um auf die jeweils hintere Regaleinrichtung zugreifen zu können. Unter Regaleinrichtungen sind Einrichtungen zu verstehen, in denen die gelagerten Einheiten bzw. Gegenstände in Reihen und Spalten neben-und übereinander angeordnet sind, ähnlich wie Bücher in einem Regal, und bei denen von der Vorderseite her der Zugriff zu jeder ausgerichteten Einheit möglich ist. Die Einheiten können auch mit speziellen Halterungen gehaltert sein, so daß nicht unbedingt Regalbretter vorhanden sein müssen. Mindestens einer durch die unmittelbar aneinandergrenzenden Regaleinrichtungen gebildeten Regaleinheit ist eine automatisch gesteuerte Greifeinrichtung zugeordnet, die für die Entnahme mindestens jeweils einer Datenträger-Einheit aus der Regaleinrichtung sowie für die darauf folgende präzise Rückführung dieser Datenträger-Einheit in die Regaleinrichtung ausgebildet ist, wofür die Regaleinrichtung jede der in ihr abgelegten Datenträger-Einheiten in einer genau bestimmten Ausrichtung bereithält. Unter Greifeinrichtungen sind vorzugsweise solche Einrichtungen zu verstehen, die an der zu ergreifenden Einheit keiner besonderen Gegenglieder bedürfen, sondern diese mit einer gewissen Anlagespannung festhalten und dann wieder freigeben können. Durch die Erfindung können die einzelnen Speicher-Einheiten durch vollautomatische Handhabung zu unterschiedlichen Zwecken entnommen, verarbeitet, wiedergespeichert und überprüft werden.

Wenn auch die Greifeinrichtung bevorzugt Regaleinheiten mit mindestens zwei hintereinanderliegenden Regaleinrichtungen zugeordnet ist, so ist ihre Zuordnung und Steuerung auch zu Regaleinheiten mit nur einer vorzugsweise endlosen Regaleinrichtung möglich. Mehrere einer einzigen Greifeinrichtung zugeordnete Regaleinheiten sind vorzugsweise auf einem Kreisbogen um die Greifeinrichtung herum angeordnet. Erfindungsgemäß kann die Vorrichtung für die automatische bzw. ferngesteuert vollautomatische Handhabung und wiederholte Speicherung der Datenträger-Einheiten oder ähnlicher Gegenstände und insbesondere auch für die entsprechend automatische Inventur des gespeicherten Bestandes ausgebildet sein. Die Vorrichtung kann ferner, insbesondere im vollautomati schen Zusammenwirken mit der Greifeinrichtung für eine Entnahme einzelner vorbestimmter bzw. sortierter Datenträger-Einheiten oder von Gruppen solcher Einheiten aus der oder den Regaleinheiten, für deren geordnete Umsetzung in einen Behälter, insbesondere einen setzkastenartig einzelne Einheiten-Halterungen aufweisenden Koffer, sowie ggf. für die umgekehrte geordnete Rückführung dieser Einheiten aus dem Behälter in die Regaleinheit bzw. Regaleinheiten ausgebildet sein, wobei das Ordnungssystem im Behälter zweckmäßig dasselbe wie in der jeweiligen Regaleinheit ist. Dadurch kann wenigstens ein dafür ausgewähltes Sortiment an Speicher-Einheiten zur besonderen Verwendung, beispielsweise zur Sicherheits-Aufbewahrung in einem Tresor einer Bank o.dgl., vollautomatisch bereitgestellt und danach auch wieder in die Regaleinheit eingegliedert werden. Die zugehörige Steuerung erfolgt vorteilhaft durch einen Rechner bzw. Computer, welcher auf die Auswahl dieser Speicher-Einheiten programmierbar ist.

Die kürzere Zugriffszeit ergibt sich daraus, daß schon während der Bewegung der Transporteinrichtung die Regaleinrichtungen derart bewegt werden können, daß sie den zu holenden Gegenstand der Transporteinrichtung praktisch entgegenbringen. Sie ergibt sich vor allem aber auch, wenn die Greifeinrichtung für die Ausrichtung und das direkte Einlegen der Datenträger-Einheit in ein Abspielgerät, wie ein Laufwerk eines Magnetbandsystemes, ausgebildet und vorzugsweise von einem programmierbaren Handhabungsgerät (Roboter) betätigt ist, da dann mit einem einzigen Greifer die jeweilige Datenträger-Einheit in alle erforderlichen Positionen zwischen der Regaleinheit und dem Abspielgerät gebracht werden kann, ohne daß, wie auch denkbar, die Datenträger-Einheit zwischen gesonderten Entnahme-, Transport-und/oder Einlegeeinrichtungen übergeben werden muß. Es kann somit nach der Erfindung zwischen einer oder mehreren gesonderten Regaleinheiten, die jeweils aus zwei oder mehr gegeneinander bewegbaren und unmittelbar aneinander angrenzenden Regaleinrichtungen bestehen und einem Abspielgerät, das mindestens ein Laufwerk für Datenträger aufweist, eine einzige, direkt arbeitende Greif-, Förder- und Einlegeeinrichtung vorgesehen sein, die sämtliche Arbeiten im Raum zwischen der Regaleinheit bzw. den Regaleinheiten und den Laufwerken ausführt. Es sind aber auch zwei simultan oder im Wechsel arbeitende Greifeinrichtungen dieser Art denkbar, die jeweils eine, zwei oder mehr Regaleinheiten bedienen können.

Eine besonders hohe Präzision der Handhabung der Datenträger-Einheiten ergibt sich, wenn die jeweilige Greifeinrichtung am Ende eines gegenüber einem Greifer-Sockel gelenkigen, frei ausragenden Greifarmes einen frei im Raum bewegbaren und drehbaren Greifer aufweist, wobei der Greifersockel vorzugsweise zwischen der bzw. den Regaleinheiten und dem Abspielgerät stehend, hängend oder in ähnlicher Weise ortsfest gesichert vorgesehen ist. Der Greifarm kann zum Beispiel nach Art eines Kniegelenkarmes zwei Armgelenke aufweisen, von denen ein äußeres an einem um eine etwa vertikale Achse drehbaren Drehkopf liegt, ein mittleres an einem Kniegelenk vorgesehen ist und ein weiteres äußeres einen Greifer trägt, der seinerseits um eine mittlere Greiferachse drehbar ist, damit die Ausrichtung der gegriffenen Einheit im Raum geändert werden kann. Der Greifer ist somit nach Art eines frei fliegenden Greifers ausgebildet, der in jeder Stellung gegenüber der bzw. den Regaleinheiten völlig berührungsfrei ist und nur in Berührung mit den Datenträger-Einheiten kommen kann. Daher können die Durchgriffsöffnungen zur Erhöhung der Speicherkapazität in Richtung zu den hinteren Regaleinrichtungen auch derart schmaler werden, daß bei aufeinander ausgerichteten Durchgriffsöffnungen deren gemeinsame Seitenbegrenzungen nach Art von Axialebenen radial nach außen divergieren.

Damit die jeweilige Regaleinrichtung die ausgewählte Datenträger-Einheit in der beschriebenen Weise der Greifeinrichtung entgegenbringt, sind der Greifer und die Regaleinheit so gesteuert, daß gleichzeitig der Greifer in eine Zugriffs-Ausgangsstellung und die für die Bereitstellung der gewünschten Einheit zu bewegende Regaleinrichtung bzw. Regaleinrichtungen in Richtung der erforderlichen Ausrichtposition bewegt werden. In der Zugriffs-Ausgangsstellung liegt der Greifer dann unmittelbar benachbart zur Außenseite der Regaleinheit bzw. der die gewünschte Datenträger-Einheit halternden Regaleinrichtung ggf. bereits innerhalb der davorliegenden Durchgriffsöffnung. Sobald die Regaleinheit ihre Zugriffsposition erreicht hat und stillsteht, führt der Greifer nur noch eine im wesentlichen ausschließlich geradlinige Zugriffsbewegung zur Ergreifung der ausgewählten Datenträger-Einheit aus. Insofern bedarf es innerhalb der Regaleinheit bzw. von Bauteilen, die an dieser vorgesehen bzw. gelagert sind, keinerlei Auf-oder Abwärtsbewegungen, da diese ausschließlich und im wesentlichen außerhalb der Regaleinheit von dem Greifer ausgeführt werden.

Obwohl eine direkte Steuerung der Greifeinrichtung von Hand denkbar ist, ist für ein vollautomatisches Arbeiten der Greifeinrichtung im Zusammenwirken mit der Regaleinheit zweckmäßig eine Steuereinrichtung vorgesehen, welche nicht nur die Entnahme der jeweiligen Datenträger-Einheit und deren Wiederablage in derselben Halterungsstelle der Regaleinheit steuert, sondern vorzugsweise auch die Datenträger-Einheit außerhalb der Regaleinheit so wendet, daß die Datenträger-Einheit liegend in das Abspielgerät eingelegt und stehend in die Regaleinheit eingesetzt werden kann.

Die Steuereinrichtung ist zweckmäßig so ausgebildet, daß das System aus mindestens einer Regaleinheit und mindestens einer Greifeinrichtung von einer räumlich vollständig getrennten Eingabeeinrichtung, insbesondere von einer Vielzahl von Computer-Terminals aus durch Eingabe des gewünschten Datenträgers inganggesetzt werden kann. Dabei wird zweckmäßig von einer Leitsteuerung die Datenträgerposition des gewünschten Datenträgers in eine Speichersteuerung gegeben, die ihrerseits ein Signal für den positionsgenauen Antrieb der diesen Datenträger enthaltenden Regaleinrichtung gibt, welche dann auf dem kürzesten Wege den Datenträger in Entnahmeposition bringt. Gleichzeitig bzw. parallel dazu wird über einen Rechner geprüft, ob eventuell vor der angesprochenen Regaleinrichtung die Durchgriffsöffnung der davorstehenden Regaleinrichtung bzw. Regaleinrichtungen in Entnahmeposition gebracht werden müssen. Ist dies der Fall, so werden diese weiteren Regaleinrichtungen entsprechend gleichzeitig positioniert. Besonders vorteilhaft ist es, wenn die Steuereinrichtung gesonderte, von einer gemeinsamen Recheneinrichtung beeinflußte Steuereinheiten einerseits für die Regaleinheit und andererseits für die Greifeinrichtung aufweist, die aufgrund der Positionserrechnung der gemeinsamen Recheneinrichtung gleichzeitig in die gewünschten Zugriffspositionen gebracht werden. Ferner ergibt sich eine noch höhere Wirksamkeit, wenn die Steuereinrichtung von derselben Rechenanlage, z.B. einem Großrechner, über Schnittstellen o.dgl. beeinflußt, die auch diejenige ist, über welche die Daten des jeweils in das Abspielgerät eingesetzten Datenträgers mit Hilfe des Terminals verarbeitet werden. Ein und dieselbe Rechenanlage gibt die Signale zur Auswahl des gewünschten Datenträgers und verarbeitet dann dessen Daten. Die Recheneinrichtung kann auch die Steuerung der Entnahme der Speicher-Einheiten für die Sicherheits-Aufbewahrung durchführen.

Eine besonders hohe Sicherheit dafür, daß immer der richtige Datenträger ausgewählt wird, ist zu erreichen, wenn die Greifeinrichtung einen Erkennungs-Sensor in Form beispielsweise eines Lesegerätes aufweist, dem für jede Datenträger-Einheit ein gesonderter Bezeichnungs-Code zugeordnet ist, der zwar an der Regaleinrichtung bzw. an der zugehörigen Halterung vorgesehen sein kann, zweckmäßig jedoch unmittelbar an der Seite der Datenträger-Einheit vorgesehen ist, von welcher her der Greifer heranfährt. Dadurch kann der Greifer unmittelbar vor dem Fassen der Datenträger-Einheit über die Recheneinrichtung prüfen lassen, ob die richtige Datenträger-Einheit vor ihm steht. Außerdem kann in Pausen-bzw. Leerlaufzeiten des Systems über die Steuereinrichtung eine teilweise oder vollständige Inventur der in der jeweiligen Regaleinheit abgelegten Datenträger durchgeführt und dadurch die Datei auf Vollständigkeit und richtige Ablage hin genau sowie vollautomatisch überprüft werden.

In Weiterbildung kann vorgesehen sein, daß beide Regaleinrichtungen unabhängig voneinander bewegbar sind. So läßt sich beispielsweise gleichzeitig die vordere Regaleinrichtung in der einen und die hintere Regaleinrichtung in der anderen Richtung bewegen, so daß nochmals eine Verkürzung der Zugriffszeit ermöglicht wird.

Erfindungsgemäß kann vorgesehen sein, daß die Regaleinrichtungen automatisch antreibbar sind, beispielsweise mit Hilfe von Motoren.

In Weiterbildung kann vorgesehen sein, daß zwei benachbarte Regaleinrichtungen in einer Richtung bewegbar sind und die Abmessung der Durchgriffsöffnung senkrecht hierzu etwa so groß ist wie die Abmessung der hinteren Regaleinrichtung quer zu ihrer Bewegungsrichtung. Während es im Prinzip möglich wäre, beide Regaleinrichtungen in je zwei Richtungen bewegbar auszubilden, beispielsweise verschiebbar und anhebbar, ermöglicht dieses Merkmal einen besonders einfachen Aufbau, insbesondere wenn innerhalb bzw. von der jeweiligen Regaleinheit keinerlei Auf-und Abwärtsbewegungen ausgeführt werden, sondern diese ausschließlich über den beispielsweise einzigen Greifer der Greifeinrichtung erfolgen.

Erfindungsgemäß kann vorgesehen sein, daß der Zugriff auf die Regaleinrichtungen immer an einer Stelle der Bewegungsrichtung bzw. je Halterungsebene an derselben ortsfesten Stelle erfolgt. Diese Stelle ist mit Vorteil derart angeordnet, daß die Greifeinrichtung möglichst kurze Bewegungswege aufweist. Die Greifeinrichtung kann dabei von zwei oder mehr, insbesondere gleichen, jedoch gesonderten Regaleinheiten umstellt sein, die zweckmäßig alle im wesentlichen gleiche Abstände vom Greifer-Sockel haben.

Es ist auch möglich, die in der Vorrichtung gelagerten Einheiten gegen äußere Einflüsse, u.a. auch gegen Diebstahl und Brand, besser zu - schützen. Es kann nämlich erfindungsgemäß vorgesehen sein, daß vor der vordersten Regaleinrichtung eine, insbesondere je Regaleinheit gesonderte, Schutzwand, insbesondere eine feuerhemmende Brandschutzwand angeordnet ist, die eine der Abmessung der Durchgriffsöffnung entsprechende verschließbare Zugangsöffnung für den berührungsfreien Durchgriff des Greifers aufweist. Je kleiner eine verschließbare Zugangsöffnung ist, desto besser läßt sie sich gegen äußere Einflüsse abschirmen. Es ist erfindungsgemäß ferner möglich, die Regaleinrichtungen bzw. die Regaleinheiten mit der Greifeinrichtung und dem Abspielgerät in einem anderweitig geschützten Raum gegen alle möglichen Einflüsse gesichert unterzubrin-

gen, so daß dann eine eigene Schutzwand nicht unbedingt erforderlich ist und eine räumlich völlig getrennte Ansteuerung bzw. manuelle Betätigung erfolgen kann.

Erfindungsgemäß kann vorgesehen sein, daß die Durchgriffsöffnung die Form eines Schlitzes mit einer mindestens der Breite bzw. Dicke der größten zu lagernden Einheit entsprechenden Breite ist, wobei alle Datenträger-Einheiten vorzugsweise identische Abmessungen haben. Dadurch ist dafür gesorgt, daß die jeweils vordere bzw. mit einer Durchgriffsöffnung versehene Regaleinrichtung räumlich möglichst gut ausgenutzt ist. Die hinterste Regaleinrichtung ist zweckmäßig von jeglicher Durchgriffsöffnung frei und statt dieser zur Halterung von Datenträger-Einheiten ausgebildet.

In Weiterbildung der Erfindung kann vorgesehen sein, daß mehrere Durchgriffsöffnungen vorhanden sind. Sowohl in Richtung der Bewegung der vorderen Regaleinrichtung können mehrere Durchgriffsöffnungen hintereinander vorhanden sein, als auch in einer quer dazu verlaufenden Richtung. Beispielsweise ist es möglich, den Schlitz nicht von oben bis unten oder von rechts bis links durchgehend zu machen, sondern mehrere Durchgriffsöffnungen seitlich versetzt anzuordnen, die damit ebenfalls den vollständigen Durchgriff auf die dahinterliegende Regaleinrichtung ermöglichen.

Besonders günstig ist es, wenn die Regaleinrichtungen endlos sind. Darunter sind beispielsweise paternosterartige Anordnungen von Regaleinrichtungen zu verstehen, oder die Anordnung nach Art eines Förderbandes, dessen Antriebswalzen senkrechte Drehachsen aufweisen.

Die Regaleinrichtungen sind mit Vorteil ineinander eingeschachtelt angeordnet. Beispielsweise sind zwei paternosterartige Anordnungen ineinander eingeschachtelt.

Besonders günstig wird die nach der Erfindung vorgeschlagene Vorrichtung, wenn die Regaleinrichtungen zwei um je eine Achse drehbar angeordnete Rundregale sind, von denen eines innerhalb des anderen angeordnet ist. Besonders vorteilhaft sind auch mehr als zwei derartige ineinander angeordnete Rundregale möglich. Die Zugriffsseite, d.h. die "Vorderseite" dieser Rundregale kann beispielsweise die radiale Innenseite des innersten Regales sein. In diesem Fall könnte die nach der Erfindung vorgeschlagene Vorrichtung außen vollständig durch eine Schutzwand abgeschlossen sein und der Zugriff des automatischen Greifers axial durch eine kleine Öffnung in das Innere des inneren Rundregals und von dort radial nach außen erfolgen.

Die ggf. auch nur aus einer einzigen umlaufenden Regaleinrichtung bestehende Regaleinheit bzw. Regaleinheiten können auch als langgestreckter Zug ausgebildet, insbesondere in Draufsicht flachoval sein, wobei die beiden Längsabschnitte des Zuges nahezu unmittelbar benachbart zueinander laufen können. Zweckmäßig ist die langgestreckte Regaleinheit etwa radial zum Greifer-Sockel angeordnet, so daß die Entnahme der Speicher-Einheiten an einem ihrer Enden bzw. im Bereich einer Umlenkung des Zuges erfolgt, an welcher die Speicher-Einheiten zur Bildung der Eingriffslücken besonders weit aufspreizen, während sie im Bereich der Längsabschnitte des Zuges über ihre gesamte Tiefe dicht an dicht liegen können. Sind mehrere langgestreckte Regaleinheiten sternförmig um die Greifeinrichtung angeordnet, so ergeben sich bei gleicher Speicherkapazität kleinere Regaleinheiten, die zur Zugriffs-Positionierung weniger Zeit beanspruchen als größere Regaleinheiten. Die Entnahme-Zonen der Regaleinheiten liegen zweckmäßig dicht an dicht etwa auf einem Kreisbogen um die Greifeinrichtung.

In Weiterbildung kann jedoch auch mit Vorteil vorgesehen sein, daß bei Rundregalen die Durchgriffsöffnung im jeweils äußeren Regal ist und der Zugriff von außen erfolgt.

Erfindungsgemäß kann vorgesehen sein, daß die Zugriffsöffnung sich längs einer Geraden erstreckt. Dies würde bei einem Rundregal bedeuten, daß in dem Zylindermantel des äußeren Regals ein geradliniger Schlitz vorhanden ist.

In Weiterbildung kann vorgesehen sein, daß beide Rundregale koaxial angeordnet sind. Dies führt dazu, daß der Platz besonders gut ausgenutzt wird.

Die Datenträger-Einheiten lassen sich trotz optimaler Speicherkapazität besonders gut entnehmen und wieder ablegen, wenn sie im Bereich ihrer Zugriffsseiten mit seitlichem Eingriffs-Lückenabstand zum Ergreifen liegen, wobei diese Lückenabstände zweckmäßig an Greiffinger der Greifeinrichtung angepaßt sind, welche die Datenträger-Einheit an zwei gegenüberliegenden Seiten unter einer relativ geringen Druckspannung sicher erfassen können.

Für jede Datenträger-Einheit ist zweckmäßig an der jeweiligen Regaleinheit eine gesonderte Halterung vorgesehen, wobei vorzugsweise gleiche Halterungen neben-und übereinander in gleichmäßigen Abständen vorgesehen und/oder zur federnden Halterung der Datenträger-Einheiten ausgebildet sind. Die jeweilige Halterung oder mehrere neben-und übereinanderliegende Halterungen, insbesondere alle jeweils übereinanderliegenden Halterungen, können auch einteilig als Spritzgußteile, beispielsweise aus Kunststoff, Aluminium o.dgl. ausgebildet sein. Zweckmäßig weisen die Halterungen jeweils eine Trichterform mit, insbesondere seitlichen und/oder quer dazu liegenden, Einlaufschrägen zum erleichterten und selbstzentrierenden Einführen der Datenträger-Einheiten auf.

Nach der Erfindung wird ebenfalls eine Klammer zur Halterung der in den Regalen zu lagernden Einheiten vorgeschlagen, falls diese Magnetband-Kassetten oder ähnlich regelmäßig gestaltete Einheiten sind, die meist ein geringes Gewicht von weniger als einem Kilopond haben.

Die Klammer ergreift die senkrecht angeordneten Kassetten im Bereich von deren oberer und unterer oder seitlichen Stirnseite, wobei die Kassetten etwa die Form von Büchern aufweisen. Die Klammern weisen zwei Arme auf, die beide mindestens in ihren Endbereichen etwa U-förmigen Querschnitt aufweisen, so daß die Kassetten zwischen die beiden einander zugekehrten U's einschiebbar sind. Mit Vorteil sind die Kassetten durch eine gewisse Federwirkung der Arme klemmend in den Klammern festgelegt. Die Kassetten mit ihren parallel zueinander verlaufenden Seitenflächen liegen bei einem Rundregal im Bereich ihrer der Drehachse zugewandten Seite dicht aneinander an, weiter außen weisen sie jedoch einen Umfangsabstand auf, so daß sie von einer automatischen Greifeinrichtung ergriffen werden können.

Eine besonders vorteilhafte Weiterbildung des Erfindungsgegenstandes besteht darin, daß die jeweilige Regaleinheit als Rückwand einen zylindermantelartigen Körper mit insbesondere mindestens einer geradlinig schlitzförmigen Öffnung aufweist, der vorzugsweise mit seinem unteren Ende stehend an einem Axial-und Radiallager drehbar gelagert ist und/oder mit einem Antriebsmotor in Eingriff steht. Dadurch kann der tragende Teil der jeweiligen Regaleinrichtung im wesentlichen ausschließlich durch diesen zylindermantelförmigen Körper gebildet sein, was bei leichter und nur eine äußerst geringe Tiefen-bzw. Radialausdehnung beanspruchender Bauweise eine hohe Festigkeit gewährleistet, wobei insbesondere bei gleichmäßiger Verteilung der schlitzförmigen Öffnungen auch eine wirksame Belüftung der Regaleinheit gewährleistet werden kann. Die zwischen den schlitzförmigen Öffnungen liegenden Teile des zylindermantelartigen Körpers können unmittelbar durch die Halterungen gebildet sein, so daß keinerlei gesonderte Teile erforderlich sind.

Der Antrieb der Regaleinrichtungen erfolgt zweckmäßig über ortsfest angeordnete bzw. stehende Motoren, die für einen modularartigen Aufbau der Regaleinheit zweckmäßig alle gleich ausgebildet und in gleicher Ausrichtung beispielsweise parallel nebeneinander angeordnet sind. Eine besonders raumsparende Anordnung der Antriebe ergibt sich, wenn deren Abtriebsritzel mit vertikaler Achse stehen und in Lauf-bzw. Zahnkränze der jeweils zugehörigen Regaleinrichtung eingrei fen, wobei außer dem Laufritzel auch der übrige, zu diesem Laufritzel achsgleiche Antrieb vertikal angeordnet werden kann.

Erfindungsgemäß ist wenigstens die jeweilige Regaleinrichtung, insbesondere gemeinsam mit der Greifeinrichtung für eine Genauigkeit der gegenseitigen Zugriffs-PPositionierung in einer Toleranz von weniger als ± I mm, vorzugsweise in einer Toleranz bei ± 0,5 mm ausgebildet. Diese besonders hohe Genauigkeit der Positionierung der Regaleinrichtungen relativ zum Greifer an der Zugriffsseite kann dadurch erreicht werden, daß der jeweilige Antriebsmotor bei Erreichen der zugehörigen Position über eine Motorbremse stillgesetzt wird bzw. dadurch, daß für das Stillsetzen ein Inkrementalgeber verwendet wird. Als Motoren bzw. Getriebe für die jeweilige Regaleinheit und/oder die Greifeinrichtung sind vorzugsweise solche vorgesehen, wie sie bei Handhabungsgeräten (Roboter) verwendet sind.

Die Lauf-bzw. Zahnkränze der Regaleinrichtungen sind zweckmäßig mit dem jeweils zugehörigen Axial-und Radiallager bzw. mit einem von dessen Lager-bzw. Laufringen integriert, so daß eine hohe Lager-und Antriebspräzision bei kompakter Bauweise erreicht wird.

Weitere Merkmale, Einzelheiten und Vorzüge der Erfindung ergeben sich außer aus den Ansprüchen auch aus der folgenden Beschreibung von bevorzugten Ausführungsformen der Erfindung sowie anhand der Zeichnung, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. In den Zeichnungen zeigen:

Fig. I einen Horizontalschnitt durch eine erfindungsgemäße Lagereinrichtung mit zwei koaxialen kreiszylindrischen Regalen;

Fig. 2 einen abgebrochenen Längsschnitt durch die Ausführung nach Fig. I;

Fig. 3 einen stark vergrößerten Ausschnitt des Schnittes nach Fig. I;

Fig. 4 eine Seitenansicht einer nach der Erfindung als Halterung von Magnetband-Kassetten vorgeschlagenen Klammer;

Fig. 5 einen Schnitt durch die Klammer der Fig. 4 ohne eingesetzte Kassette;

Fig. 6 ein weiteres Ausführungsbeispiel einer Regaleinheit im Vertikalschnitt;

Fig. 7 die Regaleinheit gemäß Fig. 6 in einer schematischen Ansicht;

Fig. 8 die Regaleinheit gemäß Fig. 7 in Draufsicht;

Fig. 9 ein Schaltbild für die Steuerung eines erfindungsgemäßen Systems zur wiederholten Speicherung und Verwendung von DatenträgerEinheiten zum Zwecke der Datenverarbeitung.

Fig. I zeigt einen Horizontalschnitt durch eine Vorrichtung zum Lagern von Magnetkassetten, die mit Hilfe einer Transport-und Greifeinrichtung II gebracht, abgespeichert und im Bedarfsfall wieder geholt werden. Die Transporteinrichtung enthält einen in Richtung der Pfeile I2 bewegbaren zentralen Pfosten I3, an dem ein Schlitten I4 auf-und abbewegbar ist. An dem Schlitten I4 ist an der der Lagervorrichtung zugewandten Seite ein Rohr I5 angeordnet, an dessen Vorderseite ein Greifer I6 teleskopartig befestigt ist. Der Greifer I6 kann in Richtung des Pfeiles I7 ausgefahren werden.

Zur Lagerung der Magnetband-Kassetten sind zwei Regaleinrichtungen I8, I9 angeordnet. Die innere Regaleinrichtung I8 enthält ein kreiszylindrisches Rohr 20, das die Rückwand der inneren Regaleinrichtung I8 bildet. Das Rohr 20 ist derart angeordnet, daß es um seine Mittelachse gedreht werden kann.

In Inneren des Rohres 20 sind drei Säulen 2I angeordnet. Auf der nach außen gerichteten Vorderseite des Rohres 20 sind horizontal verlaufende Regalbretter 22 befestigt, deren Vorderkanten 23 einen Abstand gegenüber der äußeren Regaleinrichtung I9 aufweisen. Die äußere Regaleinrichtung I9 weist ebenfalls ein ihre Rückwand bildendes kreiszylindrisches Rohr 24 auf, das konzentrisch zum Kreiszylinderrohr 20 der inneren Regaleinrichtung I8 angeordnet ist. Auch auf der Vorderseite des Rohres 24 sind Regalbretter 25 befestigt. Auch die äußere Regaleinrichtung, d.h. ihr Rohr 20 mit den daran befestigten Regalbrettern 25 läßt sich um die Längsachse des Rohres verdrehen. Beide Verdrehungen können unabhängig voneinander erfolgen.

Konzentrisch um die äußere Regaleinrichtung I9 ist eine ebenfalls kreiszylinderförmige Schutzwand 26 angeordnet, die aus einem feuerhemmenden Material bestehen oder mit diesem versehen sein kann. Die Schutzwand 26 weist eine Zugangsöffnung 27 auf, durch die der Greifer I6 der Transporteinrichtung II zu der äußeren Regaleinrichtung I9 Zugriff nehmen kann. Die Zugangsöffnung 27 erstreckt sich in Längsrichtung der kreiszylinderförmigen Schutzwand 26 längs einer Geraden. Sie läßt sich durch eine Tür 28 verschließen, die sich über die Öffnung 27 schieben läßt.

Das die Rückwand der äußeren Transporteinrichtung I9 bildende Rohr 24 weist eine ebenfalls - schlitzartige Durchgriffsöffnung 29 auf, durch die der Greifer I6 hindurchgreifen kann, um Gegenstände aus der inneren Regaleinrichtung I8 zu entnehmen.

Die Greifeinrichtung II, die äußere Regaleinrichtung I9 und die innere Regaleinrichtung I8 werden automatisch gesteuert, vorzugsweise mit Hilfe eines Computers. Soll der Greifer I6 einen Gegenstand entnehmen, der in der inneren Regaleinrichtung I8 gelagert ist, so wird die äußere Regaleinrichtung I9 derart gestellt, daß die Durchgriffsöffnung 29 in der dargestellten Stellung ist, in der der Greifer I6 radial hindurchgreifen kann. Die innere Regaleinrichtung I8 wird so gesteuert, daß der zu entnehmende Gegenstand direkt hinter der Durchgriffsöffnung 29 liegt. Der Schlitten I4 wird an dem Pfosten I3 in Auf-und Abrichtung derart eingestellt, daß der Greifer I6 den Gegenstand aus dem richtigen Fach entnimmt.

Alle diese Bewegungen können gleichzeitig erfolgen, so daß sich die Zugriffszeit wesentlich verringert. Zur Erkennung weist der Greifer I6 einen Sensor 9 auf, dem an jeder Einheit 42 ein Code 8 zugeordnet ist.

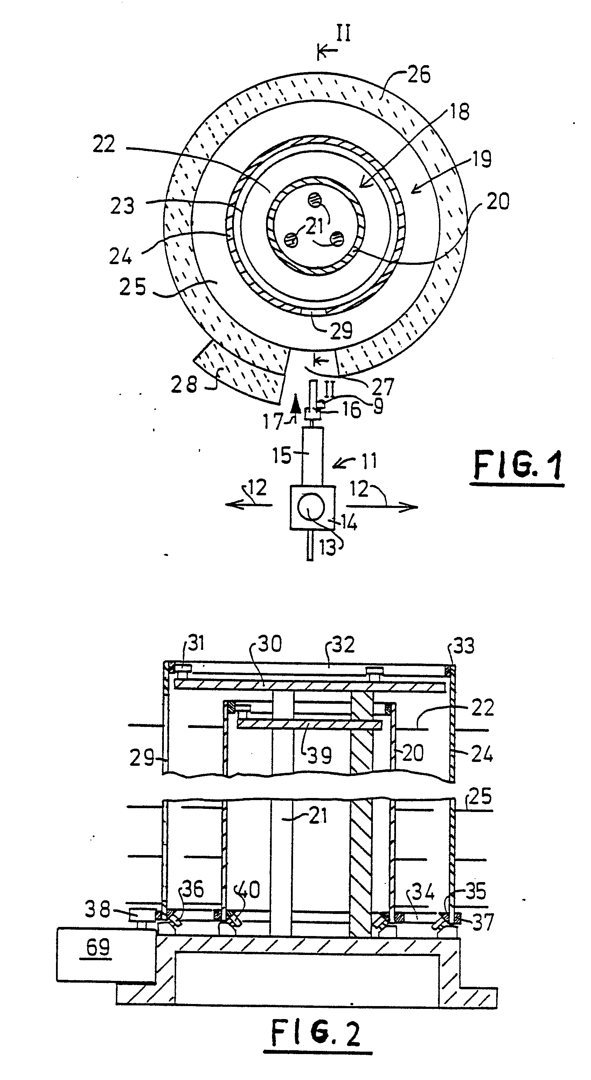

Fig. 2 zeigt in etwas vergrößertem Maßstab einen Schnitt längs Linie II-II in Fig. I. An den inneren Säulen 2I ist an deren oberen Enden eine horizontale Platte 30 befestigt. Die Platte 30 weist auf ihrer Oberseite drei drehbar gelagerte Rollen 3I auf, die sich um senkrechte Achsen drehen können. Die Rollen 3I liegen an der Innenseite eines Kreisrings 32 an, der an der Innenseite des äußeren Rohrs 24 im Bereich von dessen oberer Stirnkante 33 befestigt ist. Die Rollen 3I führen dadurch das obere Ende des äußeren Rohres 24 in seitlicher Richtung.

Im Bereich des unteren Endes des äußeren Rohres 24 ist an dessen Innenseite ein im Querschnitt dreieckiges Profil 34 befestigt. Die Hypotenuse 35 des im Querschnitt dreieckigen Profils 34 ist dabei schräg nach unten und innen gerichtet, wobei die Hypotenuse an der Außenfläche mehrerer Rollen 36 anliegt, deren Drehachsen unter dem gleichen Winkel schräg nach oben und innen verlaufen. Die Rollen 36 sind drehbar gelagert. Durch die Anlage der Rollen 36 an den Hypotenusen 35 des Profils 34 wird das Rohr 24 zentriert und sein Gewicht von den Rollen 36 aufgenommen. Die Rollen 3I an der Platte 30 nehmen daher nur seitliche Kräfte auf.

An der Unterkante des Außenrohrs 24 ist an der Außenseite ein Zahnkranz 37 befestigt, der zum Antrieb dient. Mit dem Zahnkranz 37 kämmt ein Zahnrad 38 mit senkrechter Drehachse, das mit einem nicht näher erläuterten Antrieb 69 verbunden ist. Eine Drehung des Zahnrades 38 führt zu einer Rotation des äußeren Rohres 24 um die senkrechte Drehachse.

Unterhalb der Platte 30 weisen die drei Säulen 21 eine zweite verkleinerte Platte 39 auf, die in ähnlicher Weise mit Rollen 40 versehen ist, wie die obere Platte 30. An der Platte 39 ist das Innenrohr 20 der inneren Regaleinrichtung 18 in gleicher Weise geführt wie das Außenrohr 24 mit Hilfe der Platte 30.

Auch im unteren Bereich des Innenrohrs 20 ist dieses in ähnlicher Weise ausgebildet wie das Außenrohr 24, so daß es ebenfalls um seine Drehachse verdreht werden kann. Hierzu ist ein zweiter in der Figur nicht dargestellter Antrieb vorhanden.

Die Durchgriffsöffnung 29 ist als Schlitz ausgebildet, der sich etwa von der Unterseite der oberen Platte 30 bis in Höhe des untersten Regalbodens 25 bzw. 22 erstreckt.

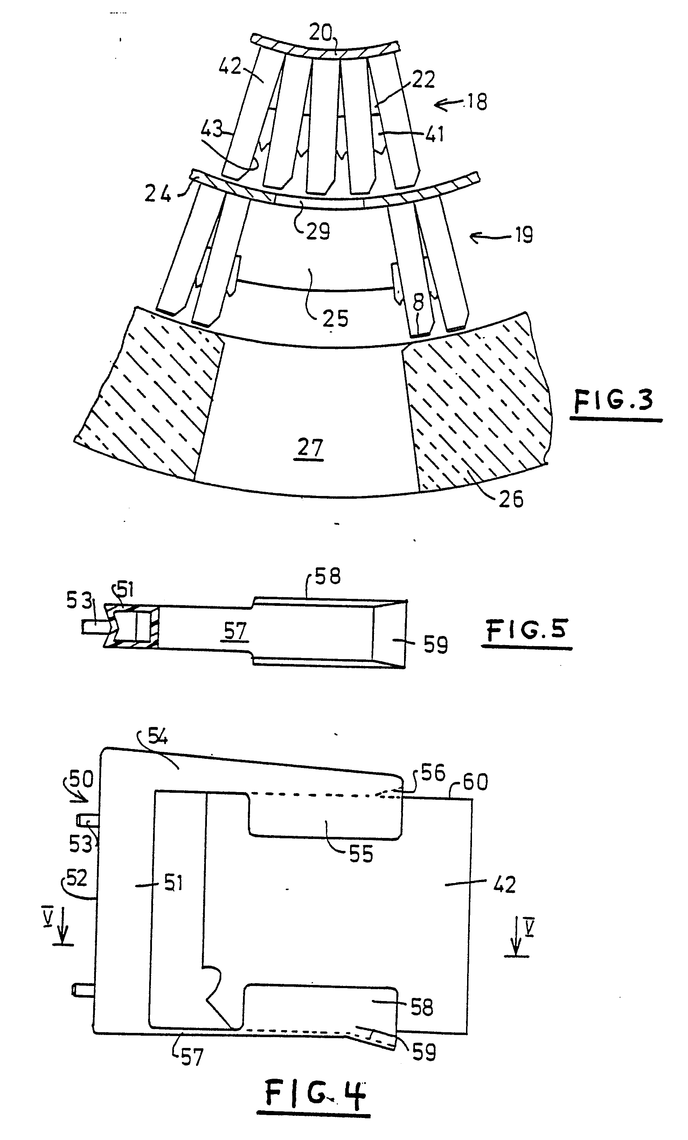

Fig. 3 zeigt nun in stark vergrößertem Maßstab einen Ausschnitt aus den beiden hintereinander angeordneten Regaleinrichtungen 18 und 19. Auf dem dargestellten Regalboden 22 der inneren Regaleinrichtung sind in regelmäßigem Abstand Halteglieder 41 angeordnet, die sich beispielsweise von einem Regalboden 22 zu dem darüberliegenden nächsten Regalboden durchgehend erstrecken. Die Halteglieder 41 weisen untereinander identischen Abstand auf. Zwischen je zwei Halteglieder 41 ist eine Datenträger-Einheit 42 in Form einer Magnetband-Kassette eingeschoben, die zwei parallele Seitenflächen 43 aufweisen. Der Abstand der Halteglieder 41 ist so gewählt, daß die Magnetband-Kassetten 42 an der durch das Rohr 20 gebildeten Rückwand des Regals dicht an dicht liegen. Aufgrund ihrer parallelen Seitenflächen 43 weisen die Magnetband-Kassetten 42 im Bereich ihrer dem Rohr 24 zugewandten Seiten einen gegenseitigen Abstand auf, so daß ein Greifer die Kassetten 42 beidseits ergreifen kann.

Die Durchgriffsöffnung 29 des äußeren Rohrs 24 weist eine Breite auf, die etwa der Breite zweier Magnetband-Kassetten entspricht.

Auf den Regalboden 25 der äußeren bzw. vorderen Regaleinrichtung 19 sind in gleicher Weise Halteglieder 41 befestigt, die Magnetband-Kassetten 42 haltern. Im Bereich der Durchgriffsöffnung 29 sind auf den Regalbrettern 25 keine Magnetband-Kassetten 42 angeordnet, und ebenso keine Halteglieder 41. Das Regalbrett 25 ist jedoch durchgehend ausgebildet und erstreckt sich über die Zugriffsöffnung 29. Dies dient zur Stabilität des Kreisrohres 24, da sonst der durchgehende Schlitz die Stabilität etwas beeinträchtigen könnte. Diese Unterbrechung der Durchgriffsöffnung 29 ist jedoch nicht nachteilig, da die Lagervorrichtung nicht dazu bestimmt ist, Magnetband-Kassetten 42 herauszunehmen und unmittelbar anschließend an einer anderen Stelle des Regals wieder einzuordnen. Die Magnetband-Kassetten 42 werden her ausgenommen und wegtransportiert und anschließend die gleiche oder eine andere Magnetband-Kassette nach Gebrauch herantransportiert und wieder abgelegt. Daher erfolgt der Zugriff nach innen immer radial, so daß die durch die Regalbretter 25 geschaffene Unterbrechung der Zugriffsöffnung 29 nicht stört.

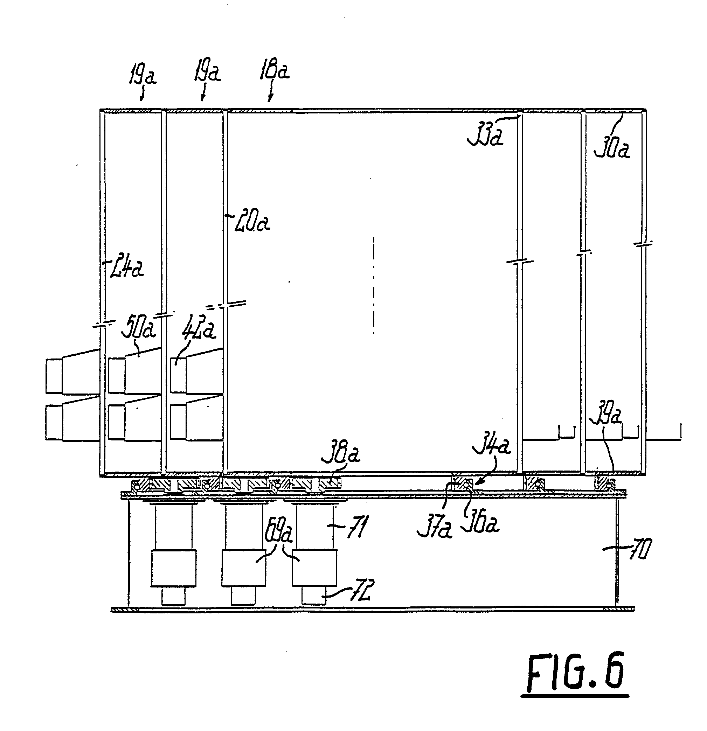

Zur Lagerung der Magnetband-Kassetten oder anderer gleich geformter Einheiten ist bei der Ausführungsform nach Fig. 1 bis 3 zwischen je zwei Regalbrettern 25 eine Reihe von äquidistanten Haltegliedern 41 angeordnet. Statt dessen ist es auch möglich, an der jeweiligen Rückwand jeder Regaleinrichtung 18, 19 Halterungen 50 in Form von Halteklammern zu befestigen, wie sie in Fig. 4 und 5 dargestellt sind. Die Halteklammer 50 läßt sich direkt an der Rückwand befestigen, so daß keine Regalbretter 25 bzw. 22 mehr erforderlich sind. Die Halteklammer weist einen Steg 51 auf, mit dem sie an der Rückwand anliegend befestigt wird. Die Befestigung geschieht derart, daß der Steg 51 parallel zur Drehachse der Rohre 20, 24 befestigt wird. Der Steg weist auf seiner der Rückwand jeder Regaleinrichtung zugewandten Rückseite 52 zwei Zentrierungszapfen 53 auf, die entsprechende Löcher eingreifen und ein Verdrehen der Klammer 50 verhindern. Diese läßt sich dann mit Hilfe einer einzigen Schraube festschrauben, die beispielsweise zwischen beiden Zapfen 53 angeordnet ist.

Der Steg 51 wird durch ein im wesentlichen geschlossenes Profil gebildet, siehe insbesondere Fig. 5. An dem Steg 51 ist im Bereich seiner Oberseite ein von der Rückseite 52 weggerichteter Arm 54 vorzugsweise einstückig angeformt, an dessen freiem Ende zwei nach unten gerichtete Flansche 55 angeformt sind. Dadurch besitzt der Arm 54 im Bereich seiner Vorderseite einen U-förmigen Querschnitt. Die Breite des Arms 54 ist im Bereich seines freien Endes größer als in den dem Steg 51 zugewandten Bereich.

Der Arm 54 ist relativ starr ausgebildet. Er besitzt im Bereich seines vorderen freien Endes eine Einlaufschräge 56, die das Einsetzen der Magnetband-Kassetten 42 erleichtert. Dem Arm 54 gegenüberliegend ist an dem unteren Ende des Steges 51 ein zweiter Arm 57 vorzugsweise einstückig angeformt, der federnd ausgebildet ist. Auch der Arm 57 ist im Bereich seines freien Endes mit zwei seitlichen Flanschen 58 versehen, die in Richtung auf den Arm 54 gerichtet sind. Durch diese doppelte U-Form wird eine Kassette 43 festgehalten, wobei die federnde Ausbildung des unteren Arms 57 sie gegen den oberen Arm 54 andrückt und damit festhält. Der untere Arm kann auch starr und dann vorzugsweise der obere Arm federnd ausgebildet sein. Die Flansche des starren Armes können auch annähernd bis zu dessen hinterem Ende durchgehen.

Auch der untere Arm 57 weist eine Einlaufschräge 59 auf, so daß das Einschieben der Kassetten 42 erleichtert ist. Wie sich aus Fig. 5 ergibt, sind die Flansche 55, 58 zum freien Ende hin spitz zulaufend ausgebildet, so daß auch hier eine Art Trichterform gebildet ist, die das Einschieben der Kassetten erleichtert.

Die Arme 57, 58 weisen im Bereich ihres Endes eine größere Breite auf als im Bereich des Steges 5I, so daß es auch bei Verwendung der Klammern 50 möglich ist, daß die eingeschobenen Kassetten mit ihren der Rückwand des Regals zugewandten Rückseiten dicht an dicht aneinander anliegen können. Durch die Abstandslücke zwischen den Armen 54, 57 liegt die Datenträger-Einheit 42 seitlich auf beiden Seiten an ihren großen Außenflächen 43 auf einem Teil ihrer Höhe, insbesondere auf mehr als der Hälfte ihrer Höhe frei, so daß der Greifer sie an diesen Seitenflächen 43 auch dann gut ergreifen kann, wenn die eingeschobene Datenträger-Einheit 42 nicht oder nur unwesentlich über die Vorderseite der Halterung 50 vorsteht. Die winkelförmig sich nach hinten verengenden Abstandslücken zwischen benachbarten Datenträger-Einheiten 42 sind an den vorderen Zugriffsseiten der Datenträger-Einheiten 42 ausreichend groß, daß Greiffinger des Greifers I6 in sie eingreifen können und ggf. die benachbart zu der zu greifenden Einheit 42 liegenden Einheiten mit ihren einander zugekehrten Seitenflächen zur genauen Ausrichtung des Greifers I6 beitragen.

Der in den Fig. 6 bis 8 dargestellte Kassettenspeicher, der beispielsweise etwa zehn übereinanderliegende Halterungsebenen mit jeweils mehreren ineinanderliegenden Kränzen von Halterungen 50a für Datenträger-Einheiten 42a aufweist, ist im dargestellten Ausführungsbeispiel durch drei vertikale, ineinanderstehende Rundregale I8a, I9a gebildet, die bis auf den Durchmesser ihrer zylindermantelartigen Körper alle gleich bzw. mit gleichen Abmessungen ausgebildet sind und um eine gemeinsame vertikale Mittelachse gedreht werden können. Jedes Rundregal weist eine obere, seine obere Stirnfläche bildende und eine untere, seine untere Stirnfläche bildende, ringscheibenförmig flache Stirnplatte 30a bzw. 39a auf, deren Außendurchmesser gleich dem größten Durchmesser des zugehörigen Rundregales und dessen Innendurchmesser nur geringfügig größer als der Außendurchmesser des nächst inneren Rundregales ist. Alle oberen und alle unteren Stirnplatten 30a, 39a liegen jeweils in einer gemeinsamen Ebene. Die Stirnplatten 30a, 39a sind jeweils ausschließlich durch zu ihnen achsparallele Mantelstäbe 20a, 24a miteinander verbunden, deren obere und untere Enden 33a im unmittelbaren Anschluß an den Außenumfang an den zugehörigen Stirnplatten 30a, 39a starr befestigt sind. Der Umfangsabstand zwischen benachbarten Mantelstäben 20a, 24a ist in Bogenwinkeln gleich dem entsprechenden seitlichen Umfangs-Rasterabstand zwischen benachbarten Halterungen 50a, so daß jeder Mantelstab eine Spalte von übereinanderliegenden Halterungen 50a trägt. Übereinanderliegende Halterungen 50a schließen nahezu unmittelbar aneinander an, wobei ihre Arme einteilig mit dem jeweils zugehörigen Mantelstab ausgebildet sein können, so daß sich eine einteilige Ausbildung jeweils aller übereinanderliegender Halterungen 50a ergibt. Der lichte Radialabstand zwischen benachbarten Mantelstäben zweier ineinanderliegender Rundregale ist nur geringfügig größer als die Einschubtiefe der beispielsweise über die Vorderseiten der Halterungen 50a frei vorstehenden Datenträger-Einheiten 42a, derart, daß deren vordere Schmalkanten nahe benachbart zum Innenumfang des jeweils äußeren Rundregales liegen. In den Fig. 6 bis 8 sind der Einfachheit halber nur einige der Halterungen 50a dargestellt. Zur Bildung der jeweiligen Durchgriffsöffnung wird ein Mantelstab oder werden mehrere Mantelstäbe weggelassen.

Die oberen Stirnplatten 30a können unmittelbar die Deckwand der Regaleinheit bilden. In ähnlicher Weise können auch die unteren Stirnplatten 39a eine untere Abschlußwand der Rundregale I8a, I9a bilden. Bei der dargestellten Ausführungsform ist die Axialerstreckung bzw. Höhe der Rundregale höchstens so groß wie der größte Außendurchmesser im beladenen Zustand, insbesondere etwas kleiner, so daß sich ein besonders sicherer Stand auf einem Sockelgehäuse 70 ergibt, welches in Draufsicht vollständig innerhalb des zylindermantelartigen Körpers des äußersten Rundregales I9a liegt und in Draufsicht ebenfalls kreisrund begrenzt sein kann. Das Sockelgehäuse 70 nimmt sämtliche Antriebsmotoren 69a auf, an deren Oberseiten ihre Abtriebsritzel in einer gemeinsamen Ebene liegen. Jedes Abtriebsritzel greift in einen Zahnkranz 37a ein, der an der Unterseite der zugehörigen Stirnplatte 39a und zwar im wesentlichen an deren Innenumfang anschließend befestigt ist und gleichzeitig den inneren Lagerring des zugehörigen Axial-und Radiallagers 34a bildet. Der jeweils zugehörige äußere Lagerring 36a ist auf der Deckwand des Sockelgehäuses 70 befestigt. Jedes Rundregal ist bei dieser Ausführungsform ausschließlich mit einem einzigen Wälzlager bzw. nur im Bereich seiner Unterseite gelagert, während es darüber bis zu seiner Oberseite von jeglichen Lagerungen frei ist. Die Zahnung des jeweiligen Zahnkranzes 37a ist an dessen Innenumfangsfläche vorgesehen, so daß das jeweilige Zahnrad 38a einen Innenläufer bildet. Daher kann das dem jeweils äußeren Rundregal 19a zugehörige Zahnrad 38a die Stirnplatte 39a des nächst inneren Rundregales 18a an der Unterseite übergreifen und annähernd bis zum äußeren, feststehenden Lagerring 36a des nächst inneren Rundregales reichen.

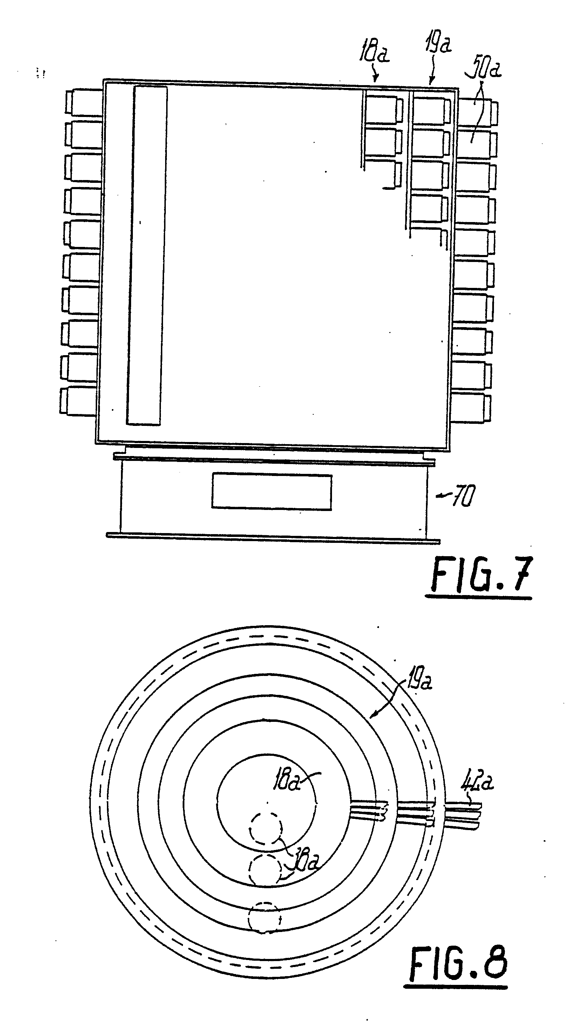

Für alle Rundregale sind zweckmäßig völlig gleiche Antriebsmotoren vorgesehen, die gemäß Fig. 8 mit ihren Mittelachsen in einer gemeinsamen Ebene bzw. in einer Axialebene der Drehachse des Rundregales vorgesehen sein können. Die ortsfesten Antriebsmotoren 39a weisen auch zweckmäßig gleiche Getriebe für alle Rundregale 18a, 19a auf und sind dadurch hängend an der Deckwand des Sockelgehäuses 70 befestigt, daß sie mit Flanschen an den oberen Enden ihrer Getriebe 71 an dieser Deckplatte befestigt sind. Auf der vom jeweiligen Getriebe 71 abgekehrten Seite jedes Antriebsmotors 69a ist ein Inkrementalgeber 72 zur Positionierung des jeweils zugehörigen Rundregales vorgesehen. Jeder Antriebsmotor 69a bildet mit seinem Getriebe 71 und seinem Inkrementalgeber 72 eine in einer Achse bzw. in der Achse des zugehörigen Zahnrades 38a liegende Baueinheit. Die genannten Antriebsaggregate reichen annähernd bis zu einer Bodenplatte des Sockelgehäuses 70 und können durch eine in diesem vorgesehene Montageöffnung zugänglich sein. Der größte Außendurchmesser der jeweiligen Regaleinheit liegt zweckmäßig in der Größenordnung von etwa 2 m, während die größte Höhe 2 m zweckmäßig nicht übersteigt.

Statt des beschriebenen Antriebes ist es auch denkbar, mindestens ein Rundregal über eine zentrale Welle anzutreiben. Sind für zwei oder mehr Rundregale koaxial ineinanderliegende Antriebswellen vorgesehen, so werden diese zweckmäßig an ihren unteren Enden über Kegelritzel-Stirnradgetriebe von den Antriebsmotoren angetrieben.

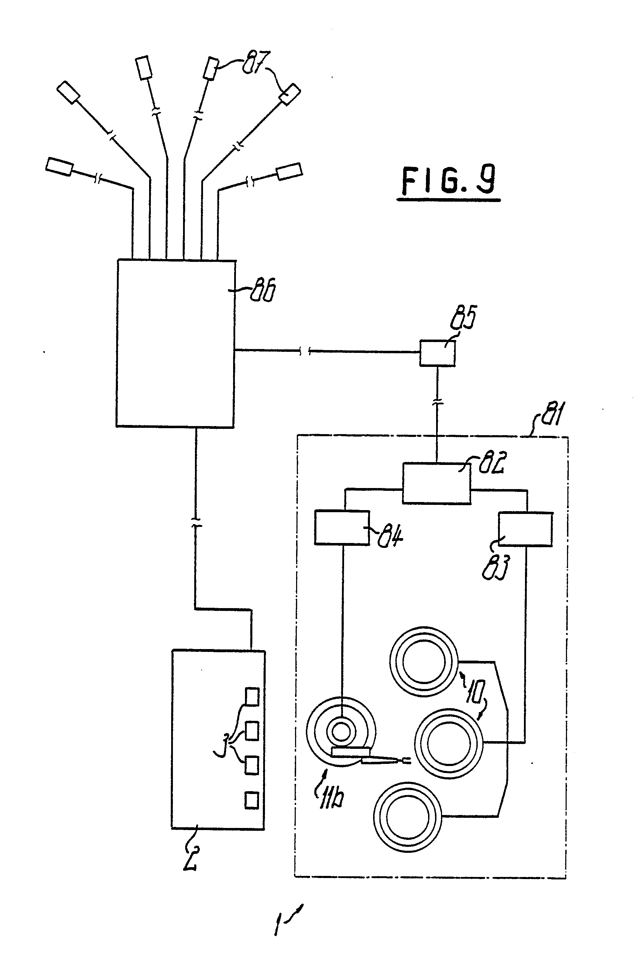

Wie Fig. 9 zeigt, kann ein erfindungsgemäßes System I, das eine, zwei oder mehr nebeneinanderstehende Regaleineinheiten 10 und eine auf deren Datenträger-Einheiten zugreifende Greifeinrichtung IIb aufweist, mit einer Steuereinrichtung 81 so vollautomatisch gesteuert werden, daß die Datenträger-Einheiten lediglich durch elektronische Auswahl jeweils einem gewünschten von mehreren Laufwerken 3 eines Abspielgerätes 2 zugeführt, dort unter Verarbeitung ihrer Daten verwendet, dann wieder entnommen und zurück an den alten Platz in die Regaleinheit 10 überführt wird. Die Steuereinrichtung 81 weist eine Recheneinrichtung 82 auf, die eine Steuereinheit 83 für die Positionierbewegungen der jeweiligen Regaleinheit 10 und eine Steuereinheit 84 für die Steuerung der Bewegungen der Greifeinrichtung IIb beeinflußt. Die durch einen Computer gebildete Recheneinrichtung 82 wird über außerhalb der Steuereinrichtung 81 liegende Schnittstellen 85 von einer Rechenanlage 86 beeinflußt, die ihrerseits die für das System I erforderlichen Kommandos von einer von mehreren Eingabeeinrichtungen 87 erhält, von denen aus nach Art von Eingabe-Terminals die Rechenanlage 86 genutzt werden kann. Die im Abspielgerät 2 anfallenden Daten stehen, ggf. über mindestens eine Schnittstelle 85 der Rechenanlage 86 und damit den Terminals 87 zur Verfügung. Von jedem der an die Rechenanlage 86 angeschlossenen Terminals können somit aufgrund eines Codes die für diesen Code freigegebenen Datenträger für die Rechenanlage 86 verfügbar gemacht werden, wobei diese Rechenanlage räumlich völlig getrennt vom System I angeordnet sein kann, was auch hinsichtlich der Terminals 87 gilt. Das System I arbeitet sehr schnell, wobei sich eine Zugriffszeit von weniger als 15 Sekunden ergeben hat. Die Regaleinheit selbst positioniert innerhalb von 6 Sekunden.

## Ansprüche

1. Vorrichtung zum Lagern von Datenträger-Einheiten (42), wie Magnetband-Kassetten, dadurch gekennzeichnet, daß mindestens zwei Regaleinrichtungen (18, 19) derart benachbart zueinander angeordnet sind, daß die Vorderseite der hinteren Regaleinrichtung (18) an die Rückseite der vorderen Regaleinrichtung (19) angrenzt und beide Regaleinrichtungen (18, 19) längs einer sie trennenden Fläche bewegbar ausgebildet sind und daß die jeweils vordere Regaleinrichtung (19) eine Durchgriffsöffnung (29) zum Durchgriff auf die jeweils hintere Regaleinrichtung (18) aufweist, wobei die Regaleinrichtungen (18, 19) für die aufgerichtete Halterung der Datenträger-Einheiten (42) ausgebildet sind und eine automatisch gesteuerte Greifeinrichtung (11) für die Entnahme jeweils einer Datenträger-Einheit (42) aus und deren ausgerichtete Rückführung in die jeweilige Regaleinrichtung (18, 19) vorgesehen ist.

2. Vorrichtung, insbesondere nach Anspruch 1, dadurch gekennzeichnet, daß die Greifeinrichtung (11) für die Ausrichtung und das direkte Einlegen der DatenträgerEinheit (42) in ein Abspielgerät (2), wie ein Laufwerk (3) eines Magnetbandsystemes, ausgebildet und vorzugsweise von einem programmierbaren Handhabungsgerät betätigt ist, wobei vorzugsweise mindestens einer, insbesondere mindestens zwei, jeweils aus wenigstens zwei hinteren und vorderen Regaleinrichtungen (18, 19) bestehenden Regaleinheiten (10) eine zwischen dieser bzw. diesen Regaleinheiten (10) und einem Abspielgerät (2) mit mindestens einem Laufwerk (3) direkt arbeitende Greif-, Förder-und Einlegeeinrichtung (11) zugeordnet ist, die insbesondere am Ende eines ge-

genüber einem Greifer-Sockel (13) gelenkigen, frei ausragenden Greifarmes einen im Raum bewegbaren und drehbaren Greifer (16) aufweist, wobei insbesondere der Greifer-Sockel (13) zwischen der bzw. den Regaleinheiten (10) und dem Abspielgerät (2) vorgesehen ist.

3. Vorrichtung, insbesondere nach Anspruch I oder 2, dadurch gekennzeichnet, daß der Greifer (16) der Greifeinrichtung (II) zur jeweiligen, einer Zugriffsseite einer Regaleinrichtung (18, 19) zugeordneten, Zugriffs-Ausgangsstellung sich simultan mit der Regaleinrichtung (18 bzw. 19) bewegend gesteuert ist und insbesondere unmittelbar im Anschluß auf die Beendigung der entgegenbringenden Positionier-Bewegung der Regaleinrichtungen (18, 19) eine im wesentlichen ausschließlich geradlinige Zugriffsbewegung ausführt, wobei vorzugsweise eine Steuereinrichtung (81) für die Entnahme der jeweiligen Datenträger-Einheit (42) aus der Regaleinheit (10) und für die Wiederablage der Datenträger-Einheit (42) insbesondere in derselben Halterungsstelle der Regaleinheit (10) vorgesehen ist.

4. Vorrichtung, insbesondere nach einem der vorhergehenden Ansprüche, dadurch gekennzeichnet, daß die Steuereinrichtung (81) der Greifeinrichtung (IIb) für die aufeinander abgestimmte gemeinsame Steuerung der jeweiligen Regaleinheit (10) und der dieser zugehörigen Greifeinrichtung (IIb) über mindestens eine Eingabeeinrichtung (87), wie eine Mehrzahl von Eingabe-Terminals, beeinflußbar ist und gesonderte, von einer gemeinsamen Recheneinrichtung (82) beeinflußte Steuereinheiten (83, 84) für die Regaleinheit (10) und die Greifeinrichtung (IIb) aufweist und daß vorzugsweise die Steuereinrichtung (81) von einer die Datenträger-Einheiten (42) über die Eingabeeinrichtung (87) verarbeitenden Rechenanlage (86), beispielsweise über Schnittstellen (85), beeinflußt ist, wobei vorzugsweise die Greifeinrichtung für das Wenden der Datenträger-Einheit (42) zwischen einer aufrechten Lage für die Regaleinheit (10) und einer liegenden Lage für das Abspielgerät (2) vorgesehen ist.

5. Vorrichtung, insbesondere nach einem der vorhergehenden Ansprüche, dadurch gekennzeichnet, daß die Greifeinrichtung (II) einen Erkennungs-Sensor (9) für einen der jeweiligen Datenträger-Einheit (42) zugehörigen Bezeichnungs-Code (8) aufweist, wobei der Sensor (9) vorzugsweise an dem Greifer (16) und der Code (8) an der Datenträger-Einheit (42), insbesondere an einer zugriffsseitigen Schmalseite vorgesehen ist.

6. Vorrichtung, insbesondere nach einem der vorhergehenden Ansprüche, dadurch gekennzeichnet, daß die Regaleinrichtungen (18, 19) mindestens zwei um je eine Achse, insbesondere eine gemeinsame koaxiale Achse, drehbar angeordnete Rundregale sind, von denen jeweils eines innerhalb des anderen angeordnet ist, und daß vorzugsweise die Greifeinrichtung (II) für den von außen erfolgenden Zugriff außerhalb der Regaleinheit (10) im wesentlichen ortsfest angeordnet ist, wobei insbesondere der Greifer (16) zwischen der oberen und unteren Begrenzung der Regaleinrichtungen (18, 19) in Zugriffs-Ausgangsstellung höhenbewegbar gelagert und der Greifer (16) frei ausragend durch die Durchgriffsöffnung (29) der jeweils vorderen Regaleinrichtung (19) bewegbar ist.

7. Vorrichtung, insbesondere nach einem der vorhergehenden Ansprüche, dadurch gekennzeichnet, daß die in der jeweiligen Regaleinrichtung (18, 19) gehaltenen Datenträger-Einheiten (42) im Bereich ihrer Zugriffsseiten mit seitlichem Eingriffs-Lückenabstand zum Ergreifen liegen, wobei vorzugsweise für jede Datenträger-Einheit (42) an der jeweiligen Regaleinheit (10) eine gesonderte, insbesondere federnde Halterung (50) vorgesehen ist und insbesondere gleiche Halterungen neben-und übereinander in gleichmäßigen Abständen angeordnet sind und wobei ferner vorzugsweise benachbarte Datenträger-Einheiten (42) im Bereich der Rückwand der jeweiligen Regaleinrichtung (18, 19) dicht an dicht liegend angeordnet sind und insbesondere durch sternförmige Ausrichtung gegenüber der Drehachse der Regaleinrichtungen (18, 19) die Eingriffslücken bilden.

8. Vorrichtung, insbesondere nach einem der vorhergehenden Ansprüche, dadurch gekennzeichnet, daß der Greifer (16) zum zangenartigen Ergreifen der jeweiligen Datenträger-Einheit (42) an zwei voneinander abgekehrten Außenseiten, insbesondere den größeren Seitenflächen (43), ausgebildet ist und daß der Greifer (16) vorzugsweise zwei gegeneinander bewegbare Zangenfinger aufweist, die um eine zwischen und etwa parallel zu ihnen liegende Wendeachse schwenkbar sind, wobei vorzugsweise die Halterung (50) der jeweiligen Datenträger-Einheit Eingriffslücken für den Greifer (16) aufweist, die vorzugsweise durch den lichten Abstand zwischen Haltearmen (54, 57) gebildet sind.

9. Vorrichtung, insbesondere nach einem der vorhergehenden Ansprüche, dadurch gekennzeichnet, daß zur Halterung der jeweiligen Datenträger-Einheit (42) eine Klammerhalterung (50) vorgesehen ist, in die die DatenträgerEinheit (42) herausziehbar einzustecken ist, wobei vorzugsweise die Halterung zwei, insbesondere übereinanderliegende, Arme (54, 57) aufweist, die die Datenträger-Einheit (42) insbesondere mindestens an deren Stirnkanten (60) ergreifen und vorzugsweise durch einen Steg (51) verbunden sind.

10. Vorrichtung, insbesondere nach einem der vorhergehenden Ansprüche, dadurch gekennzeichnet, daß die jeweilige Regaleinrichtung (18a, 19a) als Rückwand einen zylindermantelartigen Körper mit insbesondere mindestens einer geradlinig - schlitzförmigen Öffnung aufweist, der vorzugsweise mit seinem unteren Ende stehend an einem Axial- und Radiallager (34a) drehbar gelagert ist und/oder mit einem Antriebsmotor (69a) in Eingriff steht, wobei vorzugsweise der jeweilige, zum Antrieb einer Regaleinrichtung (l8a, l9a) dienende Antriebsmotor (69a) mit einem insbesondere obenliegenden Zahnrad (38a) mit vertikaler Achse in einen Zahnkranz (37a) an der Unterkante des zugehörigen zylindermantelartigen Körpers eingreift.

II. Vorrichtung, insbesondere nach einem der vorhergehenden Ansprüche, dadurch gekennzeichnet, daß dem Antriebsmotor (69a) zugehörige Zahnkranz (37a) der jeweiligen Regaleinrichtung (l8a, l9a) an seiner von der Zahnung abgekehrten Seite einen der Laufringe des Axiallagers (34a) bildet und daß insbesondere die Zahnung am Innenumfang vorgesehen ist, wobei vorzugsweise der Zahnkranz (37a) an der Unterseite der ringförmigen Stirnplatte (39a) sowie in deren radial inneren Bereich und der andere Laufring (36a) auf einer Deckplatte eines Sockelgehäuses (70) vorgesehen ist.

FIG. 1

FIG. 2

FIG.3

FIG.5

FIG.4

³⁻⁵ A23771EP,23772US,23773

FIG.6

18a 19a 50a

70

## FIG.7

19a

18a

42a

18a

## FIG.8

# FIG.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 271 440 (JENKINS et al.)<br>* ganzes Dokument *<br>--- | 1-6,8 | G 11 B 33/04<br>G 11 B 15/68<br>B 65 G 1/04<br>A 47 B 49/00 |
| A | DE-B-2 118 415 (MASCHINENFABRIKEN WIESBADEN)<br>* Spalte 2, Zeile 34 - Spalte 3, Zeile 33; Figuren 1-9 *<br>--- | 1 | |
| A | DE-A-1 774 216 (MOLINS MACHINE CO.)<br>* Seite 1, Zeile 1 - Seite 2, Zeile 19; Figuren 1-3 *<br>--- | 1 | |
| A | DE-A-2 260 675 (ELBE-KAMERA)<br>* Seite 1, Zeile 1 - Seite 3, Zeile 22; Figuren 1-3 *<br>--- | 1 | |
| D,A | DE-C-2 519 864 (KOCHANNECK)<br>* Ansprüche 1-5; Figuren 1-5 *<br>--- | 1,6,10 | |
| D,A | DE-C-2 527 150 (KOCHANNECK)<br>* Spalte 2, Zeile 59 - Spalte 3, Zeile 14; Figuren 1-4 *<br>--- | 1,10 | RECHERCHIERTE SACHGEBIETE (Int. Cl.4) |
| A | DE-U-7 815 098 (FRITZ ZUR HEIDE METALLWARENFABRIK)<br>* Seite 2, Zeilen 8-27; Figuren 1, 2 *<br>----- | 7,9 | A 47 B 49/00<br>B 65 G 1/00<br>G 11 B 15/00<br>G 11 B 23/00<br>G 11 B 33/00 |

Der vorliegende Recherchenbericht wurde für alle Patentansprüche erstellt

| Recherchenort | Abschlußdatum der Recherche | Prüfer |
|---|---|---|
| BERLIN | 19-11-1987 | SIMON J J P |